# EUROPÄISCHE PATENTANMELDUNG

(11) **EP 0 796 781 A1**
(43) Veröffentlichungstag der Anmeldung: **24.09.1997**
(21) Anmeldenummer: 97103053.1
(22) Anmeldetag: 26.02.1997
(51) Int. Cl.: B62D 25/24

(54) **Abschlusselement aus Kunststoff**

(30) Priorität: 21.03.1996 DE 19611225
(71) Anmelder: TRW United-Carr GmbH & Co. KG, D-67677 Enkenbach-Alsenborn (DE)
(72) Erfinder: Kraus, Willibald, 67269 Grünstadt (DE)
(74) Vertreter: Eder, Eugen, Dipl.-Ing.

(57) **Zusammenfassung**

Die Erfindung bezieht sich auf ein Abschlußelement 1 aus Kunststoff zum Verschließen einer Öffnung eines Trägers, insbesondere Kraftfahrzeugkarosserie, mit einer Nut 3, in welcher eine den Träger im Bereich der Öffnung beaufschlagende Dichtung 2, insbesondere aus Kunststoff, angeordnet ist. Das Abschlußelement 1 und die Dichtung 2 sind im 2-Komponenten-Spritzverfahren hergestellt und miteinander verbunden.

## Beschreibung

Die Erfindung bezieht sich auf ein Abschlußelement aus Kunststoff zum Verschließen einer Öffnung eines Trägers, insbesondere Kraftfahrzeugkarosserie, mit einer Nut, in welcher eine den Träger im Bereich der Öffnung beaufschlagende Dichtung, insbesondere aus Kunststoff angeordnet ist.

Als Stand der Technik ist es bereits bekannt, ein Abschlußelement, z.B. eine Druckluftsperre, am Außenumfang mit einer umlaufenden Nut auszustatten, in welche ein getrennt davon gefertigter Dichtring eingesetzt wird (DE 40 02 052 A1). Hier mußten das Abschlußelement und der Dichtring getrennt gefertigt und anschließend montiert werden, was mit einem erheblichen Zeit- und Kostenaufwand verbunden war.

Darüber hinaus ist es bekannt, beispielsweise Verschlußdeckel am Außenumfang mit einer Dichtung zu versehen und diese dann beipielsweise über Hitze und/oder Druck mit der Trägeröffnung zu verbinden (GB-PS 1 354 973; DE-OS 3 427 626). Auch diese bekannten Konstruktionen erforderten einen hohen Zeit- und Konstruktionsaufwand, um ihre Funktion zu erfüllen.

Demgegenüber liegt die Aufgabe der vorliegenden Erfindung darin, ein Abschlußelement aus Kunststoff zum Verschließen einer Öffnung gemäß der eingangs genannten Art zu schaffen, welches trotz einwandfreier Dichtung einfacher, schneller und kostensparender herzustellen ist.

Diese Aufgabe wird erfindungsgemäß dadurch gelöst, daß das Abschlußelement und die Dichtung im 2-Komponenten-Spritzverfahren hergestellt und miteinander verbunden sind. Durch diese neuartige Technologie entfällt der zeitaufwendige Herstellungs- und Montageaufwand beim Zusammenfügen des Abschlußelementes und der Dichtung, so daß beide Elemente in einem Verfahren hergestellt werden können.

Die Dichtung kann beispielsweise als Dichtring ausgebildet sein, wobei dieser Dichtring im Querschnitt oval, kreisförmig und/oder polygonal ausgebildet ist, d.h. ein Teil des Dichtringes kann kreisförmig und ein anderer Teil beispielsweise polygonal gestaltet sein.

Der Dichtring kann in weiterer Ausgestaltung der Erfindung am Außenumfang des Abschlußelements angeordnet sein, wobei der über die Nut herausragende Bereich des Dichtringes eine größere oder eine geringere Höhe als die Nuttiefe besitzen kann. Die Nut kann im Querschnitt oval, halbrund, rechteckig oder polygonal gestaltet sein.

Die Erfindung wird nachfolgend anhand eines in der Zeichnung dargestellten Ausführungsbeispiels näher beschrieben. In der Zeichnung zeigen:
- Fig. 1: eine Seitenansicht eines Verschlußdeckels mit am Außenumfang angeordnetem Dichtring im Querschnitt, teils gebrochen,
- Fig. 2: eine andere Ausführungsform eines Abschlußelements mit ebenfalls am Außenumfang angeordneten Dichtring, im Schnitt, teils gebrochen.

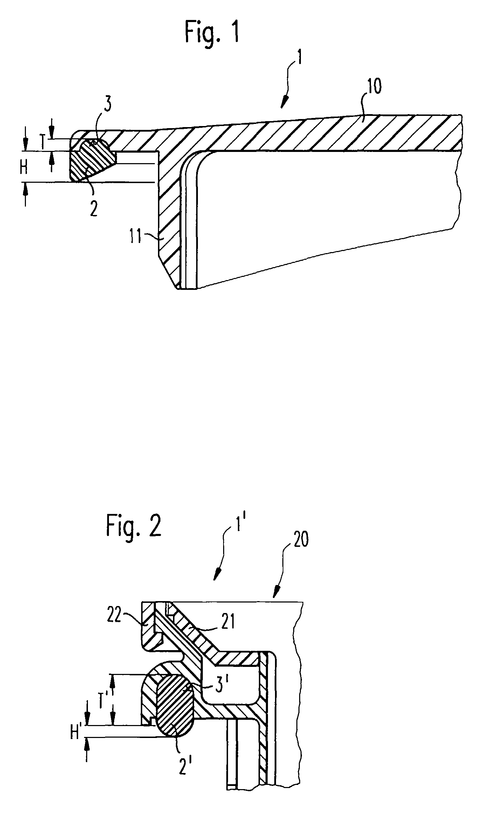

In Fig. 1 ist ein Abschlußelement aus Kunststoff zum Verschließen einer Öffnung eines Trägers, insbesondere einer Kraftfahrzeugkarosserie, dargestellt. Dieses Abschlußelement ist beispielsweise als Verschlußdeckel gestaltet mit einem Deckelkörper 10 und einem umlaufenden Flansch 11. Dieser umlaufende Flansch 11 läßt sich in eine Öffnung eines nicht näher dargestellten Trägers einsetzen.

Am Außenumfang weist der Deckelkörper 10 des Abschlußelements 1 eine Nut 3 auf. In dieser Nut 3 befindet sich ein Dichtring 2, wobei das Abschlußelement 1, d.h. der Verschlußdeckel, und der Dichtring 2 im 2-Komponenten-Spritzverfahren hergestellt und miteinander verbunden sind.

Dieser Dichtring 2 ist beispielsweise so gestaltet, daß der über die Nut 3 herausragende Bereich eine größere Höhe H als die Nuttiefe T besitzt. Weiterhin ist aus dieser Schnittdarstellung nach Fig. 1 ersichtlich, daß die Nut im Querschnitt etwa halbrund ausgebildet ist, wobei der Dichtring 2 in diesem Bereich ebenfalls Halbrundform besitzt, während der über die Nut 3 herausragende Bereich polygonale Form aufweist. Diese Form ist auf das jeweilige Erfordernis der Dichtung abgestellt.

Bei der Ausführungsform nach Fig. 2 handelt es sich um eine Teilansicht einer Rückluftsperre 20 mit zwei Rahmenelementen 21 und 22, welche in nicht näher dargestellter Weise miteinander verbunden sind. Das Rahmenteil 22 weist eine Nut 3' auf, in welcher ein Dichtring 2' angeordnet ist. Wiederum wurden das Rahmenteil 22 und der Dichtring 2' im 2-Komponenten-Spritzverfahren hergestellt und entsprechend miteinander verbunden. Es liegt damit ein Abschlußelement 1' vor, welches nicht in mehreren Stufen zu der funktionsfähigen Einheit verbunden werden mußte, sondern in einem Arbeitsvorgang, nämlich im 2-Komponenten-Spritzverfahren, hergestellt worden ist.

Bei der in Fig. 2 dargestellten Ausführungsform der Erfindung weist meist der über die Nut 3' herausragende Bereich des Dichtrings 2' eine geringere Höhe H' als die Nuttiefe T' auf.

Beiden Ausführungsformen ist gemeinsam, daß die Nut 3 bzw. 3' im Querschnitt oval, halbrund, rechteckig und/oder polygonal gestaltet sein kann. Entsprechend kann der Dichtring 2, 2' im Querschnitt oval, kreisförmig und/oder polygonal gestaltet sein.

Durch die Erfindung ergibt sich ein einfach aufgebautes und kostensparend herzustellendes Abschlußelement, welches durch die Kombination mit dem Dichtring, welcher vorzugsweise am Außenumfang des Abschlußelements 1 bzw. 1' angeordnet ist, eine sichere Abdichtung einer Öffnung eines Trägers, insbesondere einer Kraftfahrzeugkarosserie, gewährleistet.

## Patentansprüche

1. Abschlußelement aus Kunststoff zum Verschließen einer Öffnung eines Trägers, insbesondere Kraftfahrzeugkarosserie, mit einer Nut, in welcher eine den Träger im Bereich der Öffnung beaufschlagende Dichtung, insbesondere aus Kunststoff, angeordnet ist,
**dadurch gekennzeichnet,**
daß das Abschlußelement (1; 1') und die Dichtung (2; 2') im 2-Komponenten-Spritzverfahren hergestellt und miteinander verbunden sind.

2. Abschlußelement nach Anspruch 1,
**dadurch gekennzeichnet,**
daß die Dichtung als Dichtring ausgebildet ist.

3. Abschlußelement nach Anspruch 2,
**dadurch gekennzeichnet,**
daß der Dichtring (2; 2') am Außenumfang des Abschlußelements (1; 1') angeordnet ist.

4. Abschlußelement nach einem der vorhergehenden Ansprüche,
**dadurch gekennzeichnet,**
daß der über die Nut (3) herausragende Bereich des Dichtrings (2) eine größere Höhe (H) als die Nuttiefe (T) besitzt.

5. Abschlußelement nach Anspruch 1 bis 3,
**dadurch gekennzeichnet,**
daß der über die Nut (3') herausragende Bereich des Dichtrings (2') eine geringere Höhe (H') als die Nuttiefe (T') besitzt.

6. Abschlußelement nach einem der vorhergehenden Ansprüche,
**dadurch gekennzeichnet,**
daß die Nut (3; 3') im Querschnitt oval, halbrund, rechteckig oder polygonal ist.

7. Abschlußelement nach einem der vorhergehenden Ansprüche,
**dadurch gekennzeichnet,**
daß der Dichtring (2; 2') im Querschnitt oval, kreisförmig und/oder polygonal ist.
